# EUROPÄISCHE PATENTSCHRIFT

(11) **EP 3 794 917 B1**
(45) Veröffentlichungstag und Bekanntmachung des Hinweises auf die Patenterteilung: **10.08.2022**
(21) Anmeldenummer: 20193514.5
(22) Anmeldetag: 31.08.2020
(51) Int. Cl.: A01B 63/10

(54) **VERFAHREN ZUR ERKENNUNG UNZULÄSSIGER BETRIEBSZUSTÄNDE EINER ARBEITSHYDRAULIK EINES LANDWIRTSCHAFTLICHEN TRAKTORS**
METHOD FOR DETECTING INADMISSIBLE OPERATING STATES OF A HYDRAULIC SYSTEM OF AN AGRICULTURAL TRACTOR
PROCÉDÉ DE DÉTECTION DES ÉTATS DE FONCTIONNEMENT NON AUTORISÉS D'UN SYSTÈME HYDRAULIQUE DE TRAVAIL D'UN TRACTEUR AGRICOLE

(30) Priorität: 18.09.2019 DE 102019214228
(43) Veröffentlichungstag der Anmeldung: 24.03.2021
(73) Patentinhaber: Deere & Company, Moline, IL 61265 (US)
(72) Erfinder: Greif, Felix P., 68163 Mannheim (DE); Schäfer, Marc, 68163 Mannheim (DE)
(74) Vertreter: Reichert, Christian

(56) Entgegenhaltungen:
- DE-A1-102010 034 613
- DE-B3- 10 304 377

## Beschreibung

Die Erfindung betrifft ein Verfahren zur Erkennung unzulässiger Betriebszustände einer Arbeitshydraulik eines landwirtschaftlichen Traktors. Die Arbeitshydraulik umfasst wenigstens ein elektrisch betätigbares Steuerventil mit einer Hydraulickupplung zum Anschließen eines hydraulischen Verbrauchers, eine dem wenigstes einen Steuerventil zugeordnete Abzweigung zur Versorgung eines hydraulischen Hubwerks eines Frontkrafthebers mit Hydraulikflüssigkeit sowie eine zur manuellen Betätigung des hydraulischen Hubwerks des Frontkrafthebers vorgesehene Bedieneinheit.

Moderne landwirtschaftliche Traktoren erlauben es, unterschiedlichsten Arbeitsaufgaben im kommunalen, forst- und landwirtschaftlichen Bereich gerecht zu werden. Diese Vielseitigkeit wird insbesondere durch die Möglichkeit der Kombination mit einer Vielzahl verschiedener Anbaugeräte erreicht. Letztere lassen sich beispielsweise mittels eines im Front- und/oder Heckbereich des landwirtschaftlichen Traktors angeordneten Dreipunkt-Krafthebers anbringen. Je nach Anbaugerätetyp und ausgeführter Arbeitsfunktion kann das Anbaugerät über eigene hydraulische Verbraucher in Gestalt hydraulischer Antriebsaggregate bzw. Stelleinrichtungen verfügen. Diese werden seitens eines im landwirtschaftlichen Traktor vorgesehenen Hydrauliksystems mit Hydraulikflüssigkeit versorgt, wozu die hydraulischen Antriebsaggregate bzw. Stelleinrichtungen über Verbindungsschläuche an von zugehörigen Steuergeräten (SCVs - Selective Control Valves) umfasste Steuerventile am landwirtschaftlichen Traktor anschließbar sind, die sich ihrerseits mittels in einer Fahrerkabine bzw. Bedienkonsole untergebrachten Bedienelementen elektrisch betätigen lassen. Jedes der paarweise zur Bereitstellung eines Zu- und Rücklaufs in einem gemeinsamen Steuergerät zusammengefassten Steuerventile umfasst eine lösbare Hydraulikkupplung, an der sich ein komplementär ausgebildeter Hydraulikkuppler eines jeweiligen Verbindungsschlauchs des Anbaugeräts anschließen lässt.

Häufig sind derartige Steuergeräte ausschließlich im Heckbereich des landwirtschaftlichen Traktors vorgesehen, nicht jedoch im Frontbereich. Soll der landwirtschaftliche Traktor daher mit einem Frontkraftheber aufgerüstet werden, erfolgt die hydraulische Ansteuerung des zugehörigen hydraulischen Hubwerks, also der beiden Hubzylinder des Frontkrafthebers, über eines der im Heckbereich befindlichen Steuergeräte. Zu diesem Zweck ist zumindest einem der Steuerventile des betreffenden Steuergeräts eine in Richtung des hydraulischen Hubwerks führende Abzweigung zugeordnet. Weist das hydraulische Hubwerk doppeltwirkende Hubzylinder auf, ist beiden Steuerventilen eine derartige Abzweigung als Zu- bzw. Rücklauf zugeordnet, im Falle eines einfachwirkenden Hubzylinders genügt eine einzelne als Zulauf.

Ist an dem Hydraulikkuppler des zumindest einen Steuerventils zugleich ein hydraulisches Antriebsaggregat bzw. eine Stelleinrichtung eines Anbaugeräts angeschlossen, kann es im Falle einer Betätigung des hydraulischen Hubwerks zugleich zu unerwünschten Bewegungen bzw. Auslenkungen am Anbaugerät kommen.

Aus den Druckschriften DE 10 2010 034613 A1 und DE 103 04 377 B3 sind landwirtschaftliche Traktoren mit einer Arbeitshydraulik bekannt.

Es ist daher Aufgabe der vorliegenden Erfindung, ein Verfahren der eingangs genannten Art dahingehend anzugeben, dass im Falle eines für ein hydraulisches Hubwerk eines Frontkrafthebers genutzten Steuerventils unerwünschte Bewegungen bzw. Auslenkungen an einem ebenfalls daran angeschlossenen Anbaugerät unterbleiben.

Diese Aufgabe wird durch ein Verfahren mit den Merkmalen des Patentanspruchs 1 gelöst.

Bei einem Verfahren zur Erkennung unzulässiger Betriebszustände einer Arbeitshydraulik eines landwirtschaftlichen Traktors umfasst die Arbeitshydraulik wenigstens ein elektrisch betätigbares Steuerventil mit einer Hydraulikkupplung zum Anschließen eines hydraulischen Verbrauchers, eine dem wenigstens einen Steuerventil zugeordnete Abzweigung zur Versorgung eines hydraulischen Hubwerks eines Frontkrafthebers mit Hydraulikflüssigkeit sowie eine zur manuellen Betätigung der Arbeitshydraulik des Frontkrafthebers vorgesehene Bedieneinheit. Erfindungsgemäß wird mittels einer Sensoreinheit eine auf einen Steckzustand der Hydraulikkupplung hinweisende Zustandsgröße erfasst und einer Kontrolleinheit zugeführt, wobei die Bedieneinheit deaktiviert wird, wenn von der Kontrolleinheit durch Auswertung der Zustandsgröße erkannt wird, dass an der Hydraulikkupplung ein hydraulischer Verbraucher angeschlossen ist.

Auf diese Weise lässt sich vermeiden, dass eine über die Bedieneinheit vorgenommene Betätigung des hydraulischen Hubwerks zu unerwünschten Bewegungen bzw. Auslenkungen an einem an demselben Steuerventil angeschlossenen Anbaugerät führt.

Bei der Bedieneinheit kann es sich um eine mit der Kontrolleinheit in Verbindung stehende Fernbedienung mit Tastschaltern zum Heben und Senken des Frontkrafthebers handeln, die im Bereich des Frontkrafthebers angebracht ist. In einem solchen Fall ist das erfindungsgemäße Verfahren von besonderem Vorteil, denn das im Heckbereich befindliche Anbaugerät ist beim Betätigen der im Frontbereich angeordneten Fernbedienung meist nicht einsehbar, sodass eine an diesem ausgelöste Aktion nicht oder vergleichsweise spät wahrgenommen werden dürfte.

Vorteilhafte Ausgestaltungen des erfindungsgemäßen Verfahrens gehen aus den Unteransprüchen hervor.

Vorzugsweise weist die Hydraulikkupplung einen schwenkbaren Staubschutzdeckel auf, wobei mittels der Sensoreinheit erfasst wird, ob sich der Staubschutzdeckel in einer die Hydraulickupplung verschließenden (geschlossenen) Schwenkstellung A oder einer die Hydraulikkupplung freigebenden (geöffneten) Schwenkstellung B befindet. Bei der Sensoreinheit kann es sich beispielsweise um einen robusten Magnetschalter handeln, der seitens eines in den Staubschutzdeckel eingebetteten Permanentmagneten betätigt wird. Der Umstand, dass sich der Staubschutzdeckel in seiner geöffneten Schwenkstellung B befindet, ist ein sicherer Hinweis darauf, dass ein Hydraulikkuppler und damit ein zu einem hydraulischen Verbraucher eines Anbaugeräts führender Verbindungsschlauch an der betreffenden Hydraulickupplung angeschlossen ist. Im Falle eines in einem gemeinsamen Steuergerät zusammengefassten Steuerventilpaars werden die von den Sensoreinheiten der zugehörigen beiden Staubschutzdeckel bereitgestellten Zustandsgrößen von der Kontrolleinheit miteinander ODER-verknüpft, sodass die Bedieneinheit bereits dann deaktiviert wird, wenn sich einer der beiden Staubschutzdeckel in seiner geöffneten Schwenkstellung B befindet. Um sicherzustellen, dass sich der Staubschutzdeckel bei unbenutztem Hydraulikkuppler tatsächlich in seiner geschlossenen Schwenkstellung A befindet, kann dieser mit einem Schließmechanismus in Form einer Rückstellfeder oder dergleichen versehen sein.

Des Weiteren besteht die Möglichkeit, dass von der Kontrolleinheit ein zur manuellen Betätigung des wenigstens einen Steuerventils vorgesehenes Bedienelement in Abhängigkeit der erfassten Zustandsgröße deaktiviert und/oder gesperrt wird. Typischerweise ist das Bedienelement in Gestalt eines Tastschalters (sog. Paddle Pot Switch) in einer Bedienkonsole des landwirtschaftlichen Traktors untergebracht. Die Deaktivierung und/oder Sperrung wird von der Kontrolleinheit insbesondere dann vorgenommen, wenn sich aufgrund der erfassten Zustandsgröße ergibt, dass an der Hydraulikkupplung des zugehörigen Steuerventils kein hydraulischer Verbraucher angeschlossen ist, mithin das Bedienelement funktionslos ist. Dies trifft im Allgemeinen dann zu, wenn sich der Staubschutzdeckel des wenigstens einen Steuerventils in seiner geschlossenen Schwenkstellung A befindet. Hierdurch lässt sich eine über das funktionslose Bedienelement veranlasste Beaufschlagung des geschlossenen Hydraulikkupplers mit unter Druck stehender Hydraulikflüssigkeit unterbinden. Wird im Falle eines in einem gemeinsamen Steuergerät zusammengefassten Steuerventilpaars lediglich eines der Steuerventile zum Betrieb eines einfachwirkenden hydraulischen Verbrauchers verwendet, erfolgt eine Deaktivierung und/oder Sperrung lediglich des dem nicht genutzten Steuerventil zugeordneten Bedienelements. Dies kann auch vom Vorhandensein eines in der Abzweigung in Richtung des hydraulischen Hubwerks des Frontkrafthebers vorhandenen Absperrventils abhängig gemacht werden, wobei das Bedienelement ausschließlich bei geschlossenem Absperrventil deaktiviert bzw. gesperrt und ansonsten freigeben wird, sodass eine Ansteuerung des Frontkrafthebers über das betreffende Bedienelement möglich bleibt.

Daneben ist es vorstellbar, dass von der Kontrolleinheit eine Anzeigeeinheit in Abhängigkeit der erfassten Zustandsgröße angesteuert wird, insbesondere um eine Deaktivierung und/oder Sperrung eines zur manuellen Betätigung des wenigstens einen Steuerventils vorgesehenen Bedienelements kenntlich zu machen. Bei der Anzeigeeinheit kann es sich beispielsweise um eine rote Leuchtdiode handeln, die räumlich unmittelbar dem Bedienelement zugeordnet ist. Zusätzlich kann die Anzeigeeinheit auch eine grüne Leuchtdiode umfassen, deren Ansteuerung dann im Falle einer Freigabe des Bedienelements anstelle der roten Leuchtdiode erfolgt.

Für Zwecke der Außerbetriebnahme des Frontkrafthebers ist es möglich, dass die Abzweigung in Richtung des hydraulischen Hubwerks mittels eines Absperrventils unterbrochen werden kann. Dies ist unter anderem dann von Belang, wenn ein mögliches leckagebedingtes Absacken des Frontkrafthebers bei Transportfahrten oder dergleichen vermieden werden soll, oder aber, um das wenigstens eine Steuerventil auf den Betrieb eines daran angeschlossenen hydraulischen Verbrauchers einschränken zu können.

Hierbei kann vorgesehen sein, dass mittels einer weiteren Sensoreinheit eine auf einen Öffnungszustand des Absperrventils hinweisende Ventilstellungsgröße erfasst wird, wobei ein zur manuellen Betätigung des wenigstens einen Steuerventils vorgesehenes Bedienelement in Abhängigkeit der erfassten Ventilstellungsgröße deaktiviert und/oder gesperrt wird. Dies kann dann erfolgen, wenn von der Kontrolleinheit durch Auswertung der Ventilstellungsgröße in Verbindung mit der mittels der Sensoreinheit erfassten Zustandsgröße erkannt wird, dass das Absperrventil in Richtung des hydraulischen Hubwerks des Frontkrafthebers geöffnet und zugleich an der Hydraulikkupplung des wenigstens einen Steuerventils ein hydraulischer Verbraucher angeschlossen ist, was von der Kontrolleinheit insbesondere aufgrund eines in seiner geöffneten Schwenkstellung B befindlichen Staubschutzdeckels erkannt werden kann. Hierdurch lässt sich eine versehentlich über das Bedienelement mitausgelöste Betätigung des hydraulischen Hubwerks des Frontkrafthebers unterbinden. Zusätzlich kann der Bediener durch Ausgabe eines entsprechenden Hinweises über eine Informationseinheit dazu aufgefordert werden, das Absperrventil zu schließen, sodass das Bedienelement zur Betätigung des hydraulischen Verbrauchers gefahrlos freigegeben werden kann.

Das Absperrventil kann zusätzlich elektrisch betätigbar ausgebildet sein, wobei das Absperrventil auf Veranlassung der Kontrolleinheit solange geschlossen bleibt, wie sich durch Auswertung der erfassten Zustandsgröße ergibt, dass an der Hydraulikkupplung des wenigstens einen Steuerventils ein hydraulischer Verbraucher angeschlossen ist. Letzteres kann von der Kontrolleinheit aufgrund eines in seiner geöffneten Schwenkstellung B befindlichen Staubschutzdeckels erkannt werden. Sobald der Staubschutzdeckel in seine geschlossene Schwenkstellung A verbracht wird, wird das Absperrventil von der Kontrolleinheit selbsttätig geöffnet. Die solchermaßen vorgenommene Umschaltung schließt bei angeschlossenem hydraulischen Verbraucher eine unbewusste bedienerseitige Betätigung des Frontkrafthebers über das dem wenigstens einen Steuerventil zugeordnete Bedienelement von vornherein aus.

Das erfindungsgemäße Verfahren zur Erkennung unzulässiger Betriebszustände einer Arbeitshydraulik eines landwirtschaftlichen Traktors wird im Folgenden anhand der beigefügten Zeichnungen näher erläutert. Hierbei sind übereinstimmende bzw. bezüglich ihrer Funktion vergleichbare Komponenten mit denselben Bezugszeichen gekennzeichnet. Es zeigen:
- Fig. 1: eine schematisch dargestellte Anordnung zur Ausführung des erfindungsgemäßen Verfahrens, und
- Fig. 2: ein das erfindungsgemäße Verfahren beispielhaft veranschaulichendes Flussdiagramm.

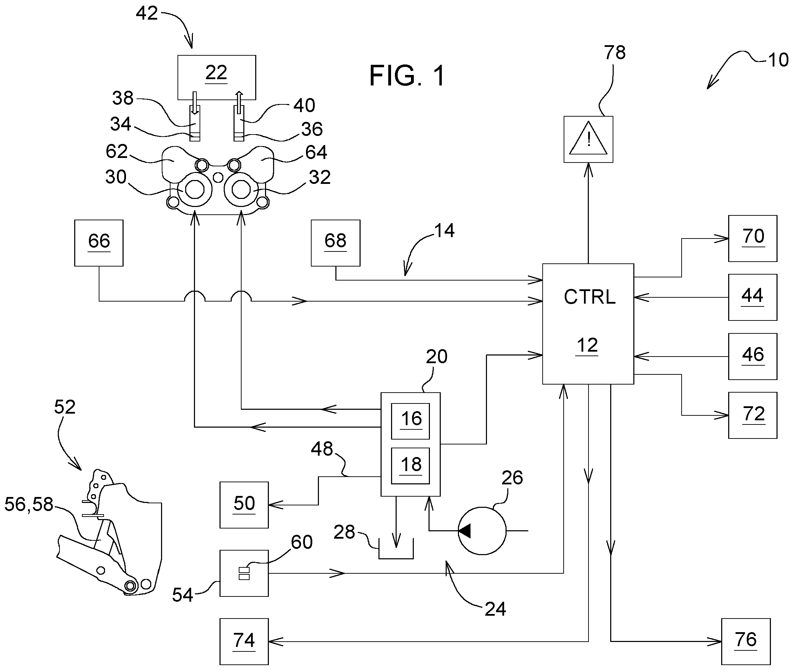

Fig. 1 zeigt eine in einem nicht dargestellten landwirtschaftlichen Traktor vorgesehene Anordnung zur Ausführung des erfindungsgemäßen Verfahrens.

Die Anordnung 10 umfasst eine mikroprozessorgesteuerte Kontrolleinheit 12 sowie eine Arbeitshydraulik 14, die ein von der Kontrolleinheit 12 elektrisch betätigbares erstes Steuerventil 16 sowie ein von der Kontrolleinheit 12 elektrisch betätigbares zweites Steuerventil 18 aufweist. Zur Bereitstellung eines Zu- und Rücklaufs sind die beiden Steuerventil 16, 18 paarweise in einem gemeinsamen Steuergerät 20 zusammengefasst, der zur Versorgung eines hydraulischen Verbrauchers 22 mit Hydraulikflüssigkeit mit einem in dem landwirtschaftlichen Traktor ebenfalls vorgesehenen Hydrauliksystem 24 kommuniziert, das im Wesentlichen aus einer hydraulischen Hochdruckpumpe 26 sowie einem Reservoir 28 für Hydraulikflüssigkeit besteht. Die Funktion eines derartigen Hydrauliksystems 24 ist hinlänglich bekannt, sodass an dieser Stelle auf eine weitergehende Beschreibung verzichtet werden soll. Das Steuergerät 20 wird im allgemeinen Sprachgebrauch auch als SCV oder Selective Control Valve bezeichnet.

Jedem der beiden Steuerventile 16, 18 ist eine lösbare Hydraulikkupplung 30, 32 zugeordnet, an der sich ein komplementär ausgebildeter Hydraulikkuppler 34, 36 eines jeweiligen Verbindungsschlauchs 38, 40 des hydraulischen Verbrauchers 22 anschließen lässt. Abweichend von der Darstellung in Fig. 1 sind die Hydraulikkupplungen 30, 32 im Allgemeinen baulich in das Steuergerät 20 integriert.

Der hydraulische Verbraucher 22 ist Bestandteil eines Anbaugeräts 42, das an einem im Heckbereich des landwirtschaftlichen Traktors angeordneten Dreipunkt-Kraftheber angebracht ist. Letzterer ist aus Gründen der Übersichtlichkeit in Fig. 1 nicht dargestellt. Je nach Anbaugerätetyp und ausgeführter Arbeitsfunktion ist der hydraulische Verbraucher 22 in Gestalt hydraulischer Antriebsaggregate bzw. Stelleinrichtungen ausgebildet. Anstelle eines Dreipunkt-Krafthebers kann es sich jedoch auch um eine beliebige anderer Kupplungseinrichtung zur Anbringung eines Anbaugeräts handeln, so zum Beispiel ein Zugmaul oder eine Pick-Up Hitch.

Eine mit der Kontrolleinheit 12 kommunizierende Anordnung zweier Bedienelemente 44, 46, die in einer Fahrerkabine bzw. Bedienkonsole des landwirtschaftlichen Traktors untergebracht und als Tastschalter (sog. Paddle Pod Switches) ausgebildet sind, erlaubt eine manuelle Betätigung der beiden Steuerventile 16, 18 seitens eines Fahrers zur Ausführung der dem hydraulischen Verbraucher 22 zugeordneten Arbeitsfunktion.

Stellvertretend ist in Fig. 1 lediglich ein einzelnes Steuergerät 20 dargestellt, tatsächlich sind in der Regel eine Vielzahl weiterer gleichartig ausgestalteter Steuergeräte vorhanden, die in einem Stapel übereinanderliegend im Heckbereich des landwirtschaftlichen Traktors montiert sind.

Des Weiteren ist eine wenigstens einem der Steuerventile 16, 18 zugeordnete Abzweigung 48 zur Versorgung eines hydraulischen Hubwerks 50 eines Frontkrafthebers 52 mit Hydraulikflüssigkeit sowie eine zur manuellen Betätigung des hydraulischen Hubwerks 50 des Frontkrafthebers 52 vorgesehene Bedieneinheit 54 vorhanden. Die Abzweigung 48 erlaubt es, das hydraulische Hubwerk 50, also die beiden Hubzylinder 56, 58 des Frontkrafthebers 52, durch Nutzung des vorhandenen Steuerventils 16, 18 hydraulisch anzusteuern. Weist das hydraulische Hubwerk 50 doppeltwirkende Hubzylinder 56, 58 auf, ist beiden Steuerventilen 16, 18 eine derartige Abzweigung als Zu- bzw. Rücklauf zugeordnet, im Falle eines einfachwirkenden Hubzylinders 56, 58 genügt eine einzelne als Zulauf.

Bei der Bedieneinheit 54 handelt es sich um eine mit der Kontrolleinheit 12 in Verbindung stehende Fernbedienung 60 mit Tastschaltern zum Heben und Senken des Frontkrafthebers 52. Die Fernbedienung 60 ist im Bereich des Frontkrafthebers 52 angebracht.

Jede der beiden Hydraulikkupplungen 30, 32 weist einen schwenkbaren Staubschutzdeckel 62, 64 auf, wobei mittels einer Sensoreinheit 66, 68 erfasst wird, ob sich der Staubschutzdeckel 62, 64 in einer die zugehörige Hydraulikkupplung 30, 32 verschließenden (geschlossenen) Schwenkstellung A oder einer die zugehörige Hydraulikkupplung 30, 32 freigebenden (geöffneten) Schwenkstellung B befindet. Bei der Sensoreinheit 66, 68 handelt es sich jeweils um einen Magnetschalter, der seitens eines in den zugehörigen Staubschutzdeckel 62, 64 eingebetteten Permanentmagneten betätigt wird. Der Umstand, dass sich der Staubschutzdeckel 62, 64 in seiner geöffneten Schwenkstellung B befindet, ist ein sicherer Hinweis darauf, dass ein Hydraulikkuppler 34, 36 und damit ein zu einem hydraulischen Verbraucher 22 des Anbaugeräts 42 führender Verbindungsschlauch 38, 40 an der betreffenden Hydraulikkupplung 30, 32 angeschlossen ist. Die von der Sensoreinheit 66, 68 erfasste Schwenkstellung bildet somit eine auf einen Steckzustand der Hydraulikkupplung 30, 32 hinweisende Zustandsgröße. Die von den beiden Sensoreinheiten 66, 68 bereitgestellten Zustandsgrößen werden der Kontrolleinheit 12 zur Auswertung zugeführt.

Daneben ist eine von der Kontrolleinheit 12 ansteuerbare Anzeigeeinheit 70, 72 vorhanden, die der Kenntlichmachung einer Deaktivierung und/oder Sperrung des zur manuellen Betätigung des Steuerventils 16, 18 vorgesehenen Bedienelements 44, 46 dient. Bei der Anzeigeeinheit 70, 72 handelt es sich um eine rote Leuchtdiode, die räumlich unmittelbar dem jeweiligen Bedienelement 44, 46 zugeordnet ist.

Für Zwecke der Außerbetriebnahme des Frontkrafthebers 52 ist es möglich, die Abzweigung 48 in Richtung des hydraulischen Hubwerks 50 mittels eines von der Arbeitshydraulik 14 umfassten Absperrventils 74 zu unterbrechen. Eine weitere Sensoreinheit 76 dient der Erfassung einer auf einen Öffnungszustand des Absperrventils 74 hinweisenden Ventilstellungsgröße, die der Kontrolleinheit 12 ebenfalls zum Zwecke der Auswertung zugeführt wird. Gemäß einer optionalen Ausgestaltung der Arbeitshydraulik 14 ist das Absperrventil 74 seitens der Kontrolleinheit 12 elektrisch betätigbar ausgebildet.

Eine mit der Kontrolleinheit 12 kommunizierende Informationseinheit 78 in Gestalt eines OLED-Displays ermöglicht die Ausgabe von zusätzlichen Hinweisen an den Fahrer.

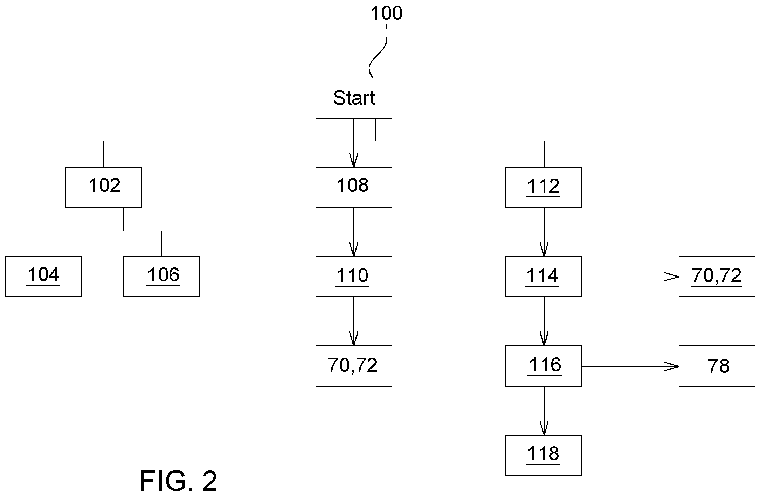

Fig. 2 zeigt ein als Flussdiagramm veranschaulichtes Ausführungsbeispiel des erfindungsgemäßen Verfahrens zur Erkennung unzulässiger Betriebszustände der Arbeitshydraulik 14 des landwirtschaftlichen Traktors.

Das von der Kontrolleinheit 12 ausgeführte Verfahren wird in einem Initialisierungsschritt 100 gestartet. Hierbei sind unterschiedliche Funktionen verwirklicht.

### Basisfunktion

Gemäß einer von der Kontrolleinheit 12 ausgeführten Basisfunktion erfolgt in einem ersten Schritt 102 zunächst eine Auswertung der mittels der Sensoreinheiten 66, 68 erfassten Zustandsgrößen. Ergibt sich durch ODER-Verknüpfung der von den beiden Sensoreinheiten 66, 68 bereitgestellten Zustandsgrößen, dass sich einer der beiden Staubschutzdeckel 62, 64 in seiner geöffneten Schwenkstellung B befindet, so schließt die Kontrolleinheit 12 darauf, dass an der betreffenden Hydraulickupplung 30, 32 ein hydraulischer Verbraucher 22 eines Anbaugeräts 42 angeschlossen ist. Um zu vermeiden, dass eine über die Bedieneinheit 54 vorgenommene Betätigung des hydraulischen Hubwerks 50 daher zugleich zu unerwünschten Bewegungen bzw. Auslenkungen am Anbaugerät 42 führt, wird die Bedieneinheit 54 von der Kontrolleinheit 12 in einem zweiten Schritt 104 deaktiviert. Dementsprechend erfolgt eine Freigabe der Bedieneinheit 54 für den umgekehrten Fall, in dem die Kontrolleinheit 12 durch Auswertung der von den beiden Sensoreinheiten 66, 68 bereitgestellten Zustandsgrößen feststellt, dass beide Staubschutzdeckel 62, 64 sich in ihrer geschlossenen Schenkstellung A befinden, mithin eine Betätigung des Frontkrafthebers 52 zulässig ist.

Ist das Absperrventil 74 elektrisch betätigbar ausgebildet, bleibt dieses auf Veranlassung der Kontrolleinheit 12 solange geschlossen, wie sich durch Auswertung der erfassten Zustandsgrößen im ersten Schritt 102 ergibt, dass an einer der Hydraulikkupplungen 30, 32 ein hydraulischer Verbraucher 22 angeschlossen ist. Sobald beide Staubschutzdeckel 62, 64 in ihre geschlossene Schwenkstellung A verbracht werden, wird das Absperrventil 74 von der Kontrolleinheit 12 in einem dritten Schritt 106 selbsttätig geöffnet. Die solchermaßen vorgenommene Umschaltung schließt bei angeschlossenem hydraulischen Verbraucher 22 eine unbewusste bedienerseitige Betätigung des Frontkrafthebers 52 über die Bedienelemente 44, 46 aus.

Es erfolgt somit eine Priorisierung des Anbaugeräts 42 bzw. der dem entsprechenden hydraulischen Verbraucher 22 zugeordneten Arbeitsfunktion.

### Erste Zusatzfunktion

Gemäß einer von der Kontrolleinheit 12 ausgeführten ersten Zusatzfunktion erfolgt in einem vierten Schritt 108 erneut eine Auswertung der von den beiden Sensoreinheiten 66, 68 bereitgestellten Zustandsgrößen. Ergibt sich, dass sich einer der beiden Staubschutzdeckel 62, 64 in seiner geschlossenen Schwenkstellung A befindet und das Absperrventil 74 geschlossen ist, wird von der Kontrolleinheit 12 das zur manuellen Betätigung des zugehörigen Steuerventils 16, 18 vorgesehene Bedienelement 44, 46 in einem fünften Schritt 110 deaktiviert und/oder gesperrt. Zugleich erfolgt die Ansteuerung der dem betreffenden Bedienelement 44, 46 räumlich unmittelbar zugeordneten Anzeigeeinheit 70, 72, um die Deaktivierung und/oder Sperrung mittels der zugehörigen roten Leuchtdiode visuell zu signalisieren. Hierdurch lässt sich eine über das funktionslose Bedienelement 44, 46 veranlasste Beaufschlagung des geschlossenen Hydraulikkupplers 30, 32 mit unter Druck stehender Hydraulikflüssigkeit unterbinden. Wird lediglich eines der Steuerventile 16, 18 zum Betrieb eines einfachwirkenden hydraulischen Verbrauchers 22 verwendet, erfolgt eine Deaktivierung und/oder Sperrung lediglich des dem nicht genutzten Steuerventil 16, 18 zugeordneten Bedienelements 44, 46. Dies kann von dem durch die erfasste Ventilstellungsgröße repräsentierten Öffnungszustand des Absperrventils 48 abhängig gemacht werden, wobei das Bedienelement 44, 46 ausschließlich bei geschlossenem Absperrventil 48 deaktiviert bzw. gesperrt und ansonsten freigeben wird, sodass eine Ansteuerung des Frontkrafthebers 52 über das betreffende Bedienelement 44, 46 möglich bleibt.

### Zweite Zusatzfunktion

Daneben ist eine von der Kontrolleinheit 12 ausgeführte zweite Zusatzfunktion vorgesehen. Bei dieser erfolgt in einem sechsten Schritt 112 eine Auswertung der Ventilstellungsgröße in Verbindung mit den seitens der beiden Sensoreinheiten 66, 68 bereitgestellten Zustandsgrößen. Ergibt sich, dass das Absperrventil 74 in Richtung des hydraulischen Hubwerks 50 des Frontkrafthebers 52 geöffnet ist und sich zugleich einer der beiden Staubschutzdeckel 62, 64 in seiner geöffneten Schwenkstellung B befindet, mithin an der betreffenden Hydraulikkupplung 30, 32 ein hydraulischer Verbraucher 22 angeschlossen ist, so wird das zur manuellen Betätigung des zugehörigen Steuerventils 16, 18 vorgesehene Bedienelement 44, 46 von der Kontrolleinheit 12 in einem siebten Schritt 114 deaktiviert und/oder gesperrt. Hierdurch lässt sich eine versehentlich über das Bedienelement 44, 46 mitausgelöste Betätigung des hydraulischen Hubwerks 50 des Frontkrafthebers 52 unterbinden. Zusätzlich erfolgt die Ansteuerung der dem Bedienelement 44, 46 räumlich unmittelbar zugeordneten Anzeigeeinheit 70, 72 in Gestalt der jeweiligen roten Leuchtdiode, sodass zugleich eine visuelle Signalisierung der Deaktivierung und/oder Sperrung des betreffenden Bedienelements 44, 46 erfolgt. Wird in einem achten Schritt 116 eine fahrerseitige Betätigungsabsicht des Bedienelements 44, 46 und damit letztlich des daran angeschlossenen hydraulischen Verbrauchers 22 erkannt, so veranlasst die Kontrolleinheit 12 über die Informationseinheit 78 die Ausgabe eines Fahrerhinweises, dass das Absperrventil 74 zu schließen ist. Sobald dies geschehen ist, wird das Bedienelement 44, 46 in einem neunten Schritt 118 freigegeben sowie die Ansteuerung der Anzeigeeinheit 70, 72 beendet.

## Patentansprüche

1. Verfahren zur Erkennung unzulässiger Betriebszustände einer Arbeitshydraulik eines landwirtschaftlichen Traktors, bei dem die Arbeitshydraulik (14) wenigstens ein elektrisch betätigbares Steuerventil (16, 18) mit einer Hydraulikkupplung (30, 32) zum Anschließen eines hydraulischen Verbrauchers (22), eine dem wenigstens einen Steuerventil (16, 18) zugeordnete Abzweigung (48) zur Versorgung eines hydraulischen Hubwerks (50) eines Frontkrafthebers (52) mit Hydraulikflüssigkeit sowie eine zur manuellen Betätigung der Arbeitshydraulik (14) des Frontkrafthebers (52) vorgesehene Bedieneinheit (54) umfasst, **dadurch gekennzeichnet, dass** mittels einer Sensoreinheit (66, 68) eine auf einen Steckzustand der Hydraulikkupplung (30, 32) hinweisende Zustandsgröße erfasst und einer Kontrolleinheit (12) zugeführt wird, wobei die Bedieneinheit (54) deaktiviert wird, wenn von der Kontrolleinheit (12) durch Auswertung der Zustandsgröße erkannt wird, dass an der Hydraulikkupplung (30, 32) ein hydraulischer Verbraucher (22) angeschlossen ist.

2. Verfahren nach Anspruch 1, **dadurch gekennzeichnet, dass** die Hydraulikkupplung (30, 32) einen schwenkbaren Staubschutzdeckel (62, 64) aufweist, wobei mittels der Sensoreinheit (66, 68) erfasst wird, ob sich der Staubschutzdeckel (62, 64) in einer die Hydraulikkupplung (30, 32) verschließenden Schwenkstellung (A) oder einer die Hydraulikkupplung (30, 32) freigebenden Schwenkstellung (B) befindet.

3. Verfahren nach Anspruch 1 oder 2, **dadurch gekennzeichnet, dass** von der Kontrolleinheit (12) ein zur manuellen Betätigung des wenigstens einen Steuerventils (16, 18) vorgesehenes Bedienelement (44, 46) in Abhängigkeit der erfassten Zustandsgröße deaktiviert und/oder gesperrt wird.

4. Verfahren nach wenigstens einem der Ansprüche 1 bis 3, **dadurch gekennzeichnet, dass** von der Kontrolleinheit (12) eine Anzeigeeinheit (70, 72) in Abhängigkeit der erfassten Zustandsgröße angesteuert wird.

5. Verfahren nach wenigstens einem der Ansprüche 1 bis 4, **dadurch gekennzeichnet, dass** die Abzweigung (48) in Richtung des hydraulischen Hubwerks (50) mittels eines Absperrventils (74) unterbrochen werden kann.

6. Verfahren nach Anspruch 5, **dadurch gekennzeichnet, dass** mittels einer weiteren Sensoreinheit (76) eine auf einen Öffnungszustand des Absperrventils (74) hinweisende Ventilstellungsgröße erfasst wird, wobei ein zur manuellen Betätigung des wenigstens einen Steuerventils (16, 18) vorgesehenes Bedienelement (44, 46) in Abhängigkeit der erfassten Ventilstellungsgröße deaktiviert und/oder gesperrt wird.

7. Verfahren nach Anspruch 5 oder 6, **dadurch gekennzeichnet, dass** das Absperrventil (74) elektrisch betätigbar ausgebildet ist, wobei das Absperrventil (74) auf Veranlassung der Kontrolleinheit (12) solange geschlossen bleibt, wie sich durch Auswertung der erfassten Zustandsgröße ergibt, dass an der Hydraulikkupplung (30, 32) des wenigstens einen Steuerventils (16, 18) ein hydraulischer Verbraucher (22) angeschlossen ist.

## Claims

1. Method for detecting inadmissible operating states of a work hydraulics of an agricultural tractor in which the work hydraulics (14) comprise at least one electrically actuatable control valve (16, 18) having a hydraulic coupling (30, 32) for connecting a hydraulic consumer (22), a branch (48) that is allocated to the at least one control valve (16, 18) so as to supply a hydraulic lifting device (50) of a front linkage (52) with hydraulic fluid and an operating unit (54) that is provided for the manual actuation of the work hydraulics (14) of the front linkage (52), **characterized in that** a state variable that indicates a connection state of the hydraulic coupling (30, 32) is ascertained by means of a sensor unit (66, 68) and supplied to a control unit (12), wherein the operating unit (54) is deactivated if the control unit (12) identifies by way of the evaluation of the state variable that a hydraulic consumer (22) is connected to the hydraulic coupling (30, 32).

2. Method according to Claim 1, **characterized in that** the hydraulic coupling (30, 32) has a pivotable dust protection cover (62, 64), wherein it is detected by means of the sensor unit (66, 68) whether the dust protection cover (62, 64) is in a pivot position (A) that seals the hydraulic coupling (30, 32) or in a pivot position (B) that releases the hydraulic coupling (30, 32).

3. Method according to Claim 1 or 2, **characterized in that** in dependence upon the ascertained state variable, the control unit (12) deactivates and/or blocks an operating element (44, 46) that is provided for the manual actuation of the at least one control valve (16, 18).

4. Method according to at least one of Claims 1 to 3, **characterized in that** the control unit (12) controls a display unit (70, 72) in dependence upon the ascertained state variable.

5. Method according to at least one of Claims 1 to 4, **characterized in that** it is possible to interrupt the branch (48) in the direction of the hydraulic lifting device (50) by means of a cut-off valve (74) .

6. Method according to Claim 5, **characterized in that** by means of a further sensor unit (76) a valve position variable is ascertained that indicates an open state of the cut-off valve (74), wherein an operating element (44, 46) that is provided for the manual actuation of the at least one control valve (16, 18) is deactivated and/or blocked in dependence upon the ascertained valve position variable.

7. Method according to Claim 5 or 6, **characterized in that** the cut-off valve (74) is designed so as to be electrically actuatable, wherein the cut-off valve (74) remains closed at the instigation of the control unit (12) for as long as it is indicated by way of the evaluation of the ascertained state variable that a hydraulic consumer (22) is connected to the hydraulic coupling (30, 32) of the at least one control valve (16, 18).

## Revendications

1. Procédé de détection d'états de fonctionnement non autorisés d'un système hydraulique de travail d'un tracteur agricole, dans lequel le système hydraulique de travail (14) comprend au moins une soupape de commande (16, 18) pouvant être actionnée électriquement comportant un raccord hydraulique (30, 32) servant au raccordement d'un consommateur hydraulique (22), une dérivation (48) associée à l'au moins une soupape de commande (16, 18) pour l'alimentation d'un dispositif de levage hydraulique (50) d'un relevage avant (52) en fluide hydraulique ainsi qu'une unité de manœuvre (54) prévue pour l'actionnement manuel du système hydraulique de travail (14) du relevage avant (52), **caractérisé en ce qu'**au moyen d'une unité de détection (66, 68), une grandeur d'état indiquant un état de connexion du raccord hydraulique (30, 32) est détectée et est acheminée à une unité de contrôle (12), l'unité de manœuvre (54) étant désactivée lorsqu'il a été détecté par l'unité de contrôle (12), par évaluation de la grandeur d'état, qu'un consommateur hydraulique (22) est raccordé au raccord hydraulique (30, 32).

2. Procédé selon la revendication 1, **caractérisé en ce que** le raccord hydraulique (30, 32) présente un couvercle pivotant de protection contre la poussière (62, 64), et, au moyen de l'unité de détection (66, 68), il est détecté si le couvercle de protection contre la poussière (62, 64) se trouve dans une position de pivotement (A) fermant le raccord hydraulique (30, 32) ou dans une position de pivotement (B) libérant le raccord hydraulique (30, 32).

3. Procédé selon la revendication 1 ou 2, **caractérisé en ce qu'**un élément de manœuvre (44, 46) prévu pour l'actionnement manuel de l'au moins une soupape de commande (16, 18) est désactivé et/ou bloqué par l'unité de contrôle (12) en fonction de la grandeur d'état détectée.

4. Procédé selon au moins l'une des revendications 1 à 3, **caractérisé en ce qu'**une unité d'affichage (70, 72) est commandée par l'unité de contrôle (12) en fonction de la grandeur d'état détectée.

5. Procédé selon au moins l'une des revendications 1 à 4, **caractérisé en ce que** la dérivation (48) peut être interrompue au moyen d'une soupape d'arrêt (74) en direction du dispositif de levage hydraulique (50).

6. Procédé selon la revendication 5, **caractérisé en ce qu'**au moyen d'une autre unité de détection (76), une grandeur de position de soupape indiquant un état d'ouverture de la soupape d'arrêt (74) est détectée, un élément de manœuvre (44, 46) prévu pour l'actionnement manuel de l'au moins une soupape de commande (16, 18) étant désactivé et/ou bloqué en fonction de la grandeur de position de soupape détectée.

7. Procédé selon la revendication 5 ou 6, **caractérisé en ce que** la soupape d'arrêt (74) est réalisée de manière à pouvoir être actionnée électriquement, la soupape d'arrêt (74) étant, à la demande de l'unité de contrôle (12), maintenue fermée tant qu'il ressort de l'évaluation de la grandeur d'état détectée qu'un consommateur hydraulique (22) est raccordé au raccord hydraulique (30, 32) de l'au moins une soupape de commande (16, 18).
